# EUROPÄISCHE PATENTSCHRIFT

(11) **EP 2 927 302 B1**
(45) Veröffentlichungstag und Bekanntmachung des Hinweises auf die Patenterteilung: **06.03.2019**
(21) Anmeldenummer: 15161296.7
(22) Anmeldetag: 27.03.2015
(51) Int. Cl.: C08K 5/05, C08K 5/06, C08K 5/10, C08K 5/49, C08K 5/5419, C09K 21/06

(54) **FLAMMSCHUTZMITTEL AUF BASIS VON SUBSTITUIERTEN DI-, TRI- UND TETRA-ARYLETHANVERBINDUNGEN**
FLAME RETARDANT COMPOSITION BASED ON SUBSTITUTED DI-, TRI- AND TETRA ARYLETHANE COMPOUNDS
MOYEN DE PROTECTION CONTRE LES FLAMMES À BASE DE LIAISONS DE DI-, TRI- ET TÉTRA-ARYLÉTHANE SUBSTITUÉES

(30) Priorität: 03.04.2014 EP 14163357
(43) Veröffentlichungstag der Anmeldung: 07.10.2015
(73) Patentinhaber: BASF SE, 67056 Ludwigshafen am Rhein (DE)
(72) Erfinder: Roth, Michael, 64686 Lautertal (DE); Fuchs, Sabine, 33602 Bielefeld (DE); Nesvadba, Peter, 1723 Marly (CH); Keppeler, Uwe, 67126 Hochdorf-Assenheim (DE)
(74) Vertreter: BASF IP Association

(56) Entgegenhaltungen:
- EP-A2- 0 002 764
- DE-A1- 2 615 039
- DE-A1- 2 650 173
- DE-T2- 60 200 414

## Beschreibung

Die vorliegende Erfindung betrifft die Verwendung von substituierten Di-, Tri- und Tetra-Arylethanverbindungen als Flammschutzmittel, sowie thermoplastische Formmassen enthaltend substituierten Di-, Tri- und Tetra-Arylethanverbindungen als Flammschutzmittel.

Expandierte Polyolefin-Schaumstoffpartikel sind das Ausgangsmaterial für eine Vielzahl von Produkten in den Bereichen Automotive, Verpackungen, technische Teile, Sport & Freizeit etc. Insbesondere für den Einsatz in Bau und Transport müssen die Polyolefinschschaumstoffe deutlich flammhemmende Eigenschaften aufweisen. Zur flammhemmenden Ausrüstung der Polyolefin-Schaumpartikel kommen hier u. a. halogenierte Flammschutzmittel, häufig in Kombination mit Antimontrioxid als Synergist, zum Einsatz (z. B.: JP-A-7-309967 oder JP-A-10-147661).

US 5,393,812 und EP 1 239 005 A1 (DE 602 00 414 T2) beschreiben Polyolefinzusammensetzungen, die ein bromiertes Phosphat, z. B Tris(tribromoneopentyl)phosphat oder Phosphonatester als Flammschutzmittel und ein sterisch gehindertes Amine als Lichtstabilisator enthalten.

Durch die häufig nötigen hohen Einsatzmengen und zum Teil starken Weichmachereigenschaften der halogenierten Flammschutzmittel sind die resultierenden Schaumstoffe häufig stark in Ihren mechanischen und Verarbeitungs-Eigenschaften beeinträchtigt.

Als Initiatoren für radikalische Polymerisationsreaktionen sind 1,2-Diarylglykole bzw. die entsprechenden Alkylether (EP 0 002 764 A2), Peroxidgruppen-freie 1,2-Diphenylethanderivate (DE 26 50 173 A1) und Monosilylether mit Triaryl-1,2-glykolstruktur (DE 26 15 039 A1) bekannt.

Es ist bekannt, Triazine oder sterisch gehinderte Amine zur thermischen Stabilisierung in Polyolefinzusammensetzungen (EP 0 889 085 A2), zur Verringerung der Schwankungen der Zelldurchmesser (EP 1 441 002 A1) oder als Flammschutzmittelkomponente (EP1 452 559 und EP 1 454 947) in Polyolefinschaumstoffen einzusetzen.

Der Einsatz von höheren Mengen an sterisch gehinderten Aminen kann im Brandfalle zu einem brennenden Abtropfen der Polymerschmelze führen, was zur Folge hat, dass wichtige Brandtests (z. B. B2 nach DIN 4102, UL94 HF-1) nicht bestanden werden.

In der EP 2 420 533 A1 ist die Verwendung von sterisch gehinderten Aminethern allein und in Kombination mit kondensierten organischen Phosphorsäureestern zum Einsatz als Flammschutzsystem in prä-expandierten Polyolefin-Partikeln und Polyolefinschaumstoffen beschrieben. Die in den Beispielen verwendeten hohen Anteile an sterisch gehinderten Aminethern führen in der Regel zu verschlechterten Produkt- oder Verarbeitungseigenschaften.

Die WO 2010/026230 A1 beschreibt synergistische Flammschutzmittelgemische aus zwei oder mehreren Phosphonatverbindungen oder Phosphonsäurederivaten und sterisch gehinderten Aminen für Polymere, insbesondere Polyethylenfolien, zur Verhinderung des Abtropfens im Brandfalle.
Zur Herstellung von 1,2-Diarylethanverbindungen sind folgende Verfahren bekannt:
A) Umsetzung eines-Halo-diphenylacetophenons mit Alkohol (Stevens, Calvin L.; DeYoung, Jacob J., Journal of the American Chemical Society (1954), 76 718-20). Verwendung anderer Alkohole und anders substituierten Acetophenone erlaubt die Herstellung entsprechend modifizierten Derivate (Karavan, V. S.; Temnikova, T. I., Zhurnal Organicheskoi Khimii (1966), 2(8), 1417-21).
B) Photoreaktion eines Benzylideneacetals mit einem Keton (a) Suzuki, Morio; Inai, Toshimi; Matsushima, Ryoka, Bulletin of the Chemical Society of Japan (1976), 49(6), 1585-9; b) Mosca, Raffaella; Fagnoni, Maurizio; Mella, Mariella; Albini, Angelo, Tetrahedron (2001), 57(52), 10319-10328) Verwendung anderer Acetate oder anders substituierten Ketone erlaubt die Herstellung entsprechend modifizierten Derivate.
C) Grignard Reaktion eines Benzil-Ketals (a) Wolfers, Heinrich; Rudolph, Hans; Rosenkranz, Hans Juergen. (Bayer A.-G., Fed. Rep. Ger.), DE 2615039 A1 19771020; b Klos, R.; Gruber, H.; Greber, G., Journal of Macromolecular Science, Chemistry (1991), A28(9), 925-47) Mechanistisch verwandt ist die KOtBu induzierte Anlagerung von Carbanionen an Benzil-Ketale (Shimizu, Sumio; Ogata, Masaru, Synthetic Communications (1989), 19(11-12), 2219-27)
D) Elektrooxidation von Enolethern (Cariou, Michel; Simonet, Jacques; Toupet, Loic, Tetrahedron Letters (1987), 28(12), 1275-6)
E) Radical mediated coupling of hydrocarbons (G.E. Haertzel, E.S. Huyser, J. Org. Chem. 1964, 29, 3341-44)

Aufgabe der vorliegenden Erfindung war es, ein neues halogenfreies Flammschutzmittel und insbesondere eine halogenfreie Flammschutzzusammensetzung für Polyolefinschaumstoffe bereitzustellen, die in geringen Mengen einen ausreichenden Flammschutz gewährleistet, im Brandfalle kein brennendes Abtropfen zeigt und insbesondere die mechanischen Eigenschaften nicht wesentlich verändert.

Die Aufgabe wurde durch die Verwendung einer Verbindung der Formel (I) 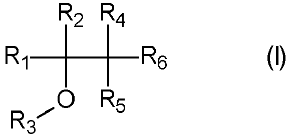 in der die Substituenten die folgende Bedeutung haben:
- R₁:: substituiertes (z. B. C₁-C₄-Alkyl, C₂-C₃-Alkenyl, CN, C₁-C₄-Alkoxy, COOH, COOC₁-C₄-Alkyl, CONH₂, CONHC₁-C₄-Alkyl, CON(C₁-C₄Alkyl)₂, PO(OC₁-C₄Alkyl)₂) oder unsubstituiertes C₆-C₁₄-Aryl
- R₂:: substituiertes (z. B. C₁-C₄-Alkyl oder C₁-C₄-Alkoxy), oder unsubstituiertes C₆-C₁₄-Aryl, C₁-C₈-Alkyl, C₅-C₈-Cycloalkyl, Benzyl, CN;
C₁-C₈-Alkoxy (welches in seiner Kette durch ein oder mehrere O, S oder N-atome unterbrochen oder terminiert werden kann), C₅-C₈-Cycloalkoxy oder Benzyloxy;
- R₃:: H, C₁-C₈-Alkyl, C₅-C₈-Cycloalkyl, Benzyl, C₁-C₁₈-Acyl oder (CH₃)₃Si;
- R₄:: H, OH, substituiertes (z. B. C₁-C₄-Alkyl) oder unsubstituiertes C₆-C₁₄-Aryl, C₁-C₈-Alkoxy (welches in seiner Kette durch ein oder mehrere O, S oder N-atome unterbrochen oder terminiert werden kann),
C₅-C₈-Cycloalkoxy oder Benzyloxy;
- R₅:: C₁-C₈-Alkyl, substituiertes (z. B. C₁-C₄-Alkyl) oder unsubstituiertes C₆-C₁₄-Aryl, C₁-C₈-Alkoxy (welches in seiner Kette durch ein oder mehrere O, S oder N-atome unterbrochen oder terminiert werden kann),
C₅-C₈-Cycloalkoxy oder Benzyloxy;
- R₆:: substituiertes (z. B. C₁-C₄-Alkyl, C₂-C₃-Alkenyl, CN, C₁-C₄-Alkoxy, COOH, COOC₁-C₄-Alkyl, CONH₂, CONHC₁-C₄-Alkyl, CON(C₁-C₄Alkyl)₂, PO(OC₁-C₄Alkyl)₂) oder unsubstituiertes C₆-C₁₄-Aryl,
oder
- R₁:: substituiertes oder unsubstituiertes C₆-C₁₄-Aryl;
- R₂, R₃:: bilden zusammen mit dem Kohlenstoffatom, an das sie gebunden sind, ein Ringsystem, vorzugsweise einen substituierten oder unsubstituierten, 5-gliedrigen 1,3-Dioxoloan oder 1,3-Dioxan-Ring;
- R₄, R₅:: bilden zusammen mit dem Kohlenstoffatom, an das sie gebunden sind, ein Ringsystem, vorzugsweise einen substituierten oder unsubstituierten, 5-gliedrigen 1,3-Dioxoloan oder 1,3-Dioxan-Ring;
- R₆:: substituiertes oder unsubstituiertes C₆-C₁₄-Aryl,
als halogenfreies Flammschutzmittel, gelöst.

Die Gruppen R₂ und R₃, sowie R₄ und R₅ können bevorzugt zusammen mit dem Kohlenstoffatom, an das sie gebunden sind, ein Ringsystem eine -O-C₂-C₄-O- Alkylengruppe bilden, welche optional mit einer oder mehreren C₁-C₄-Alkylgruppen substituiert werden kann. Bevorzugt haben die Substituenten die folgende Bedeutung:
- R₁:: Phenyl, optional substituiert mit Methyl, oder Methoxy;
- R₂:: Phenyl, optional substituiert mit Methyl, oder Methoxy, C₁-C₄-Alkyl oder CN, oder C₁-C₄ Alkoxy, welches in seiner Kette durch ein O-Atom unterbrochen werden kann;
- R₃:: H, C₁-C₄-Alkyl, C₁-C₄-Acyl oder (CH₃)₃Si;
- R₄:: Phenyl oder C₁-C₄-Alkoxy, welches in seiner Kette durch ein O-Atom unterbrochen werden kann;
- R₅:: C₁-C₄-Alkyl, Phenyl oder C₁-C₄-Alkoxy, welches in seiner Kette durch ein O-Atom unterbrochen werden kann;
- R₆:: Phenyl, optional substituiert mit Methyl, oder Methoxy.

Besonders bevorzugt haben die Substituenten die folgende Bedeutung:
- R₁:: Phenyl
- R₂:: Phenyl, C₁-C₂-Alkyl, C₁-C₄-Alkoxy, welches in seiner Kette durch ein O-Atom unterbrochen werden kann;
- R₃:: H, C₁-C₂-Alkyl oder Acetyl;
- R₄:: Phenyl oder C₁-C₄-Alkoxy, welches in seiner Kette durch ein O-Atom unterbrochen werden kann;
- R₅:: C₁-C₂-Alkyl, Phenyl oder C₁-C₄-Alkoxy, welches in seiner Kette durch ein O-Atom unterbrochen werden kann;
- R₆:: Phenyl.

Ganz besonders bevorzugt sind die Reste R₄ und R₅ C₁-C₄-Alkoxy und R₁ und R₆ Phenyl.

Die Verbindung der Formel (I) kann als Flammschutzmittel alleine oder in Verbindung mit weiteren, halogenfreien Flammschutzmitteln und Flammschutzsynergisten verwendet werden. Bevorzugt wird es mit den unten als Flammschutzmittel FR-P beschriebenen halogenfreie, organischen Phosphorverbindungen verwendet. Das Gewichtsverhältnis von Flammschutzmittel FR-A (Verbindung der Formel (I)) zu FR-P liegt hierbei bevorzugt im Bereich von 1:10 bis 10:1.

Eine bevorzugte Herstellungsmethode für die Verbindungen der Formel (I) ist in folgendem Schema dargestellt. Das gegebenenfalls substituierte Benzil-Ketal ((a), R₁= Aryl) wird mit einem C-nucleophil R₂-X (beispielsweise X = Li, MgCl, MgBr) zu dem Alkoholat (b) umgesetzt. Hydrolyse von (b) liefert den Alkohol (c) welcher anschliessend nach allgemein bekannten Methoden mit einem Alkylierungsmittel R₃-Y veräthert oder mit einem Acylierungsmittel R₃-Y verestert wird. Die Verätherung bzw. Veresterung kann auch direkt am Alkoholat (b) vorgenommen werden.
Herstellung von Benzil-Ketalen (a) ist bekannt (z.B. Bruenisholz, Jean; Kirchmayr, Rudolf, (Ciba-Geigy A.-G.), Ger. Offen. (1974), DE 2337813 A1).

Herstellung von Benzil-Ketalen (a) ist bekannt (z.B. Bruenisholz, Jean; Kirchmayr, Rudolf, (Ciba-Geigy A.-G.), Ger. Offen. (1974), DE 2337813 A1).

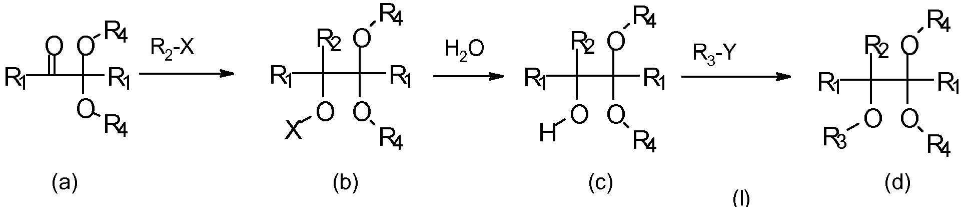

Die Herstellung von Verbindungen der Formel A und B ist bekannt aus A: Gulilat Gebeyehu and Edward McNelis, J.Org. Chem., Vol. 45, No, 22, 1980, 4281; B: V. Calo, L. Lopez, Synthesis, 1984, 774.

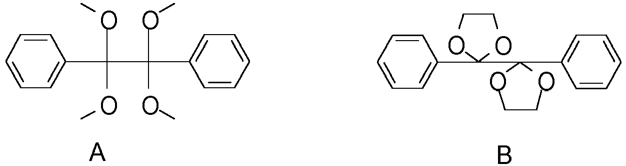

Die Verbindung der Formel (I) wird als Flammschutzmittel für halogenfreie, thermoplastische Formmassen verwendet.

Gegenstand der Erfindung ist daher auch eine Formmasse, bestehend aus
a) 70 bis 99,95 Gew.-% mindestens eines thermoplastischen Polymeren P,
b) 0,05 bis 10 Gew.-% mindestens einer Verbindung der Formel (I) als Flammschutzmittels FR-A,
c) 0 bis 10 Gew.-% einer halogenfreien, organischen Phosphorverbindung als Flammschutzmittel FR-P,
d) 0 bis 10 Gew.-% eines weiteren Additives A
wobei die Summe der Komponenten a) bis d) 100 Gew.-% ergeben und die Formmasse halogenfrei ist.

Bevorzugt ist eine Formmasse, bestehend aus
a) 75 bis 99,8 Gew.-% mindestens eines thermoplastischen Polymeren P,
b) 0,1 bis 5 Gew.-% mindestens einer Verbindung der Formel (I) gemäß Anspruch 1 als Flammschutzmittels FR-A,
c) 0,1 bis 10 Gew.-% einer halogenfreien, organischen Phosphorverbindung als Flammschutzmittel FR-P,
d) 0 bis 10 Gew.-% eines weiteren Additives A
wobei die Summe der Komponenten a) bis d) 100 Gew.-% ergeben.

Besonders bevorzugt ist eine Formmasse, bestehend aus
a) 80 bis 97,9 Gew.-% mindestens eines thermoplastischen Polymeren P,
b) 0,1 bis 2 Gew.-% mindestens einer Verbindung der Formel (I) als Flammschutzmittels FR-A,
c) 1 bis 8 Gew.-% einer halogenfreien organischen Phosphorverbindung als Flammschutzmittel FR-P,
d) 1 bis 10 Gew.-% eines weiteren Additives A
wobei die Summe der Komponenten a) bis d) 100 Gew.-% ergeben.

Die Formmasse ist halogenfrei und besteht aus den Komponenten a) bis d).

Als thermoplastisches Polymer P eigenen sich amorphe oder teilkristalline Homo- und/oder Copolymere oder Mischungen davon. Geeignete thermoplastische Polymere P sind Polykondensate, wie Polyamid (PA), Polyimid (PI), Polyetherimid (PEI), Polyphtalimid (PPA), Polyester, Polyethylenterephatat (PET), Polybutylenterephtalat (PBT), Polycarbonat (PC), Polyetherketone (PEI, PEEK), Polysulfon (PSU), Polyethersulfon (PES), Polyphenylenether (PPE), Polyphenylensulfid (PPS), Polymerisate und Copolymerisate, wie Polylactid (PLA), Polymethylmethacrylat (PMMA), Polymethacrylimid (PMMI), Polyoxymethylen (POM), Polystyrol (PS), Schlagzähpolystyrol (HIPS), Acrylnitril-Butadien-Styrol (ABS), Styrol-Acrylnitril-Copolymerisat (SAN), Acrylester-Styrol-Acrylnitril (ASA), Polypropylen (PP), Polyethylen (PE), Cyclo-Olefin-Copolymere (COC), Polyvinylacetat (PVAC), natürliche Polymere, wie Celluloseacetat, thermoplastische Stärke (TPS), Polyhydroxyalkanoate (PHA), Polyhydroxybutyrat (PHB).

Bevorzugt werden als thermoplastisches Polymer P Polyolefine, welche als Homo- oder Copolymere aus den Monomeren Ethylen, Propylen, Buten-1 oder Isobuten aufgebaut sind, sowie Polyolefinderivate und -copolymerisate. Geeignete Polyolefine sind, Polypropylen-Homopolymerisate (PP) Polyethylen-Homopolymere, wie PE-LD (low density), PE-LLD (linear low density), PE-MD (medium density), PE-HD (high density), PE-HMW (high molecular weight), PE-UHMW) (ultra high molecular weight), Polyethylencopolymere, wie PE-ULD (Ultraleichtes Polyethylen), EVA (Ethylen Vinylacetat-Copolymer), EVAL (Ethylen/Vinylalkohol-Copolymer), Ethylen-Acryl-Copolymerisate oder Polypropylen-Copolymerisate aus Propylen und den Copolymeren Ethylen, Buten-1 und höhere an-Olefine. Besonders bevorzugt werden Propylen-Ethylen-Random-Copolymere verwendet.

Die Formmasse enthält als Flammschutzmittel FR-A eine Verbindung der Formel (I) mit den oben beschriebenen Substituenten. Besonders bevorzugt sind die Substitutenten R₄ und R₅ C₁-C₄-Alkoxy und R₁ und R₆ Phenyl.

Die Formmasse kann als Flammschutzmittel FR-P halogenfreie, organische Phoshate, Phosphonate, Phosphinate, Phosphinoxide, Phosphine oder Phosphite enthalten. Geeignete Phosphate sind beispielsweise Resorcin-bis(diphenylphosphat) (FYROLFLEX® RDP), Bisphenol-A bis(diphenylphosphat) (FYROLFLEX® BDP), FYROLFLEX® Sol-DP, Triphenylphosphate, Hydroxyalkylester auf Basis von Phosphorsäure, Ammonium polyphosphate (APP), Resorcin bis(diphenylphosphat) als Oligomer (RDP), Phosphazen basierte Verbindungen, Ethylenediamine diphosphat (EDAP). Geeignete Phosphonate sind beispielsweise Alkylester der Methanphosphonsäure, Methanphosphonsäure-monomethylester-Aluminiumsalz, Diethyl-N,N-bis(2-hydroxyethyl)-aminomethylphosphonate. Geeignete Phosphite sind beispielsweise Aluminiumphosphit mit und ohne Kristallwasser, Metallsalze der Hypophosphorigen Säure, insbesondere Aluminumhypophosphit, und Melaminsalze von organischen Phosphor-basierten Säuren unterschiedlicher Oxidationsstufe.

Das Gewichtsverhältnis von Flammschutzmittel FR-A zu FR-P liegt bevorzugt im Bereich von 1:10 bis 10:1.

Als weitere Additive kommen UV- und Wärmestabilisatoren, Ruß- bzw. Graphit, Verarbeitungshilfsmittel in üblichen Mengen in Betracht (z. B.: Plastics Additives Handbook, Ed. by H. Zweifel, 5th Ed., Hanser Publ., Munich 2001, pp. 681-698).

Die erfindungsgemäßen thermoplastischen Formmassen können nach bekannten Verfahren hergestellt werden, indem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt oder als Konzentrat in Polymermatrix zugesetzt und danach die restlichen Ausgangsstoffe einzeln und/oder ebenfalls gemischt hinzugegeben werden. Die Mischtemperaturen liegen in der Regel zwischen 180 bis 320°C. Geeignete Extruder sind beispielsweise beschrieben in: Handbuch der Kunststoffextrusion, Vol. 1 Grundlagen, Editors F. Hensen, W. Knappe, H. Potente, 1989, pp. 3-7, ISBN:3-446-14339-4 (Vol. 2 Extrusionsanlagen 1986, ISBN 3-446-14329-7).

Die Einarbeitung der erfindungsgemäß verwendeten Verbindungen der Formel (I) in thermoplastische Formmassen erfolgt bevorzugt durch Zugabe zu einer Polymerschmelze und Mischen in einem Extruder. Nach einer weiteren bevorzugten Arbeitsweise können die Flammschutzkomponenten mit einem Polymeren gemischt, konfektioniert und granuliert werden. Das erhaltene Granulat kann anschließend als gut dosierbares Konzentrat (Masterbatch) verwendet werden

Die erfindungsgemäße Formmasse zeichnet sich durch eine gute Flammwidrigkeit aus und eignet sich zur Herstellung von Fasern, Formteilen, Folien oder Schaumstoffen.

Bevorzugt weisen die Folien der erfindungsgemäßen Formmasse, insbesondere solche, die Polyolefine als Polymer P enthalten, Schichtdicken im Bereich von 1 bis 250 µm, insbesondere im Bereich von 50 bis 150 µm auf.

Expandierte Schaumstoffpartikel können beispielsweise durch Imprägnierung von Granulaten mit einem Treibmittel in wässriger Suspension in einem Druckkessel und anschließendem Entspannen erhalten werden. Bevorzugt beträgt die Schüttdichte auf diese Weise erhältlichen, expandierten Partikel 10 bis 300 kg/m³. Die Schaumstoffpartikel können anschließend in einer Form zu Schaumstoffformteilen verschweißt werden.

Die erfindungsgemäße Verwendung von Verbindungen der Formel (I) als Flammschutzmittel zeichnet sich durch hervorragende flammhemmende Eigenschaften schon bei geringen Mengen, insbesondere zusammen mit halogenfreien, organischen Phosphorverbindungen aus. Die Verbindungen der Formel (I) eignen sich insbesondere für spritzgegossene Polyolefinformmassen und für dünne Polyolefinfolien oder Polyolefinschaumstoffe. Diese finden Verwendung als Folie, Verpackungsmaterial, zur Wärmedämmung, für Bauanwendungen, als Verpackung oder Gehäuse für Armaturen und Anlagen im Bereich Heizung, Sanitär und Lüftung, als Verbundformteil, in der Automobilindustrie, im Boots- und Schiffsbau oder in Windkraftanlagen.

### Beispiele

Herstellung der Verbindungen gemäß Formel I

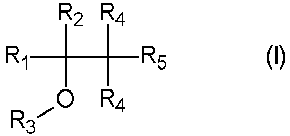

### Beispiel FR-A2: 2,2-Dimethoxy-1,1,2-triphenyl-ethanol (FR-A2, Tabelle 2)

Zu einer gerührten Lösung von 25.65 g (0.1 mol) Benzil-dimethylacetal (Irgacure 651) in Tetrahydrofuran (THF, 200 ml) werden unter Argon bei Raumtemperatur 90 ml einer 1.8 M Lösung von Phenylmagnesiumchlorid (0.162 mol) in THF zugetropft. Das Reaktionsgemisch wird anschliessend 5 h bei 45 °C und dann 12 h bei Raumtemperatur gerührt. Danach werden unter Kühlung im Eisbad 100 ml gesättigter wässriger NH₄Cl Lösung und 50 ml Wasser zugetropft und das Gemisch wird mit Dichlormethan extrahiert (200 und 80 ml). Die vereinigten Extrakte werden mit Wasser gewaschen (2 x 50 ml), über MgSO4 getrocknet und eingedampft. Durch Kristallisation des festen Rückstands aus Dichlormethan-Hexan werden 23.0g von 2,2-Dimethoxy-1,1,2-triphenyl-ethanol (=FR-A2) als weisser Feststoff, Schmp. 137-140 °C erhalten.

1H-NMR (CDCl3, 400 MHz, δ ppm): 7.69-7.66 (m, 4 ArH), 7.28-7.10 (m, 11 ArH), 3.95 (s, OH), 3.30 (s, 2 x OCH3).

### Beispiel FR-A1: 1,1,2-Trimethoxy-1,2,2-triphenylethan (FR-A1, Tabelle 2)

Zu einer gerührten Suspension von 0.48 g (55% in Mineralöl, 0.011 mol) Natriumhydrid in Dimethylformamid (DMF, 20 ml) werden innert 10 Minuten 3.34 g (0.01 mol) festes 2,2-Dimethoxy-1,1,2-triphenyl-ethanol (aus Beispiel FR-A2) zugegeben. Die Suspension wird 150 Min. bei 45 °C gerührt. Nach Abkühlung auf Raumtemperatur werden 1.7 g (0.012 mol) Methyljodid zugetropft, das Gemisch wird 150 Min gerührt und dann in 250 ml Eiswasser gegossen. Der ausgefallene Niederschlag wird abgesaugt, gewaschen mit Wasser und aus Dichlormethan-Hexan umkristallisiert. Es werden 2.74 g der Titelverbindung als weisser Feststoff, Schmp. 150-152 °C, erhalten.

1H-NMR (CDCl3, 400 MHz, δ ppm): 7.48-7.46 (m, 4 ArH), 7.28-6.99 (m, 11 ArH), 3.37 (s, 2 x OCH3), 3.04 (s, OCH3).

### Beispiel FR-A3: (1,2,2-Trimethoxy-1-methyl-2-phenyl-ethyl)benzene (FR-A3, Tabelle 2)

Zwischenstufe 1,1-Dimethoxy-1,2-diphenyl-propan-2-ol: Zu einer gerührten Lösung von 6.45 g (0.025 mol) Benzil-dimethylacetal (Irgacure 651) in THF (50 ml) werden unter Argon bei Raumtemperatur 30 ml einer 3 M Lösung von Methylmagnesiumchlorid (0.09mol) in THF zugetropft. Das Reaktionsgemisch wird anschliessend 90 Min. bei Raumtemperatur gerührt. Danach werden unter Kühlung im Eisbad 25 ml gesättigter wässriger NH4Cl Lösung zugetropft und das Gemisch wird mit Methyl-t-butylether extrahiert (100 und 40 ml). Die vereinigten Extrakte werden mit Wasser gewaschen (3 x 50 ml), über MgSO4 getrocknet und eingedampft. Es werden 6.9 g 1,1-Dimethoxy-1,2-diphenyl-propan-2-ol als visköses Öl erhalten.

1H-NMR (CDCl3, 400 MHz, δ ppm): 7.26-7.04 (m, 10 ArH), 3.56 (s, OH), 3.53 (s, OCH3), 3.35 (s, OCH3), 1.61 (s, CH3).

Zu einer gerührten Suspension von 0.72 g (55% in Mineralöl, 0.017 mol) Natriumhydrid in DMF (5 ml) wird innert 10 Minuten die Lösung von 4.05 g (0.015 mol) 1,1-Dimethoxy-1,2-diphenylpropan-2-ol in DMF (15 ml) zugetropft. Die Suspension wird 75 Min. bei 45 °C gerührt. Nach Abkühlung auf Raumtemperatur werden 2.55 g (0.018 mol) Methyljodid zugetropft, das Gemisch wird 170 Min gerührt, dann mit eiskaltem Wasser (80 ml) verdünnt und mit Methyl-t-butylether (120 + 25 ml) extrahiert. Die vereinigten Extrakte werden mit Wasser (3 x 50 ml) gewaschen, über MgSO4 getrocknet und eingedampft. Der Rückstand wird aus Dichlormethan-Hexan umkristallisiert. Es werden 2.22 g der Titelverbindung als weisser Feststoff, Schmp. 76-79 °C, erhalten.

1H-NMR (CDCl3, 400 MHz, δ ppm): 7.28-6.92 (m, 10 ArH), 3.58 (s, OCH3), 3.21 (s, OCH3), 3.14 (s, OCH3), 1.59 (s, CH3).

### Beispiel FR-A4: 1-methoxy-1,2,2-triphenyl-ethyl)benzene (FR-A4, Tabelle 2)

Die Verbindung wurde hergestellt nach der publizierten Vorschrift (G.E. Haertzel, E.S. Huyser, J. Org. Chem. 1964, 29, 3341-44)

### Beispiel FR-A5: (1-Ethoxy-2,2-dimethoxy-1,2-diphenyl-ethyl)benzene (FR-A5, Tabelle 2)

Beispiel 1 wurde wiederholt, anstelle von Methyljodid werden jedoch 1.2 Aeqv. Ethylbromid eingesetzt. Die Titelverbindung wird in 53.8 % Ausbeute als weisser Feststoff, Schmp. 140-144 °C erhalten.

1H-NMR (CDCl3, 400 MHz, δ ppm): 7.48-7.45 (m, 4 ArH), 7.28-6.99 (m, 11 ArH), 3.39 (s, 2 x OCH3), 3.18-3.12 (q, OCH2CH3), 1.20-1.17 (t, OCH2CH3)

**Tabelle 1: Bezeichnung und Struktur der Beispiele FR-A1 bis FR-A5**

| | | |
|---|---|---|
| 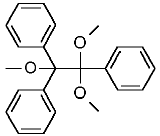 | (1,1,2-Trimethoxy-2,2-diphenyl-ethyl)benzene | FR-A1 |
| 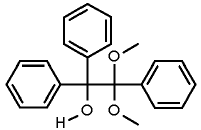 | 2,2-Dimethoxy-1,1,2-triphenyl-ethanol | FR-A2 |
| 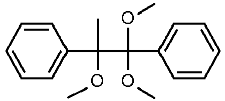 | (1,2,2-Trimethoxy-1-methyl-2-phenyl-ethyl)benzene | FR-A3 |
| 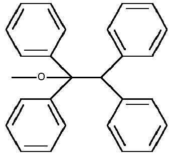 | (1-Methoxy-1,2,2-triphenyl-ethyl)benzene | FR-A4 |
| 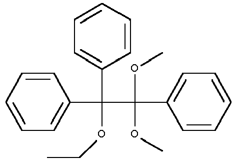 | (1,1-Dimethoxy-2-ethoxy-2,2-diphenyl-ethyl)benzene | FR-A5 |

### Herstellung von flammgeschützten Polypropylenschaumstoffen:

### Einsatzstoffe:

FR-A1 bis FR-A5Synthese wie oben beschrieben
FR-P1: Kommerziell erhältlich als Fyrolflex® RDP von der Firma ICL-IP Europe BV.
FR-P2: Synthetisiert nach WO2011/083009 A1.
FR-P3: Kommerziell erhältlich als Aflammit PCO 900 von der THOR GmbH.
FR-P4: Synthetisiert nach WO2010/063623 A1.
FR-P5: Synthetisiert nach WO2010/057851 A1.
PP: Moplen RP320M,Polypropylen Random Copolymer von Lyondellbasell mit einer Dichte von 0,900 g/cm3 und einer Schmelzefließrate (MVR 230°C/2,16 kg) von 8,0 g/10 min.

**Tabelle 2: Bezeichnung und Struktur Flammschutzmittel FR-P1 bis FR-P5**

| | | |
|---|---|---|
| 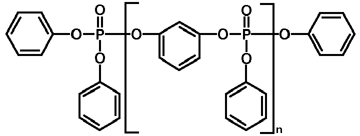 | Poly-[Resorcinol bis(diphenyl phosphate)] | FR-P1 |
| 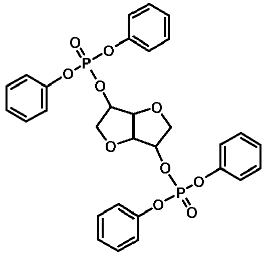 | Phosphorsäure-6-(diphenoxy-phosphoryloxi)-hexahydro-furo[3,2-b]-furan-3ylester diphenylester | FR-P2 |
| 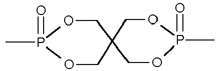 | 2,4,8,10-Tetraoxa-3,9-diphosphaspiro[5.5]undecane,3,9-dimethyl-, 3,9-dioxide | FR-P3 |
| 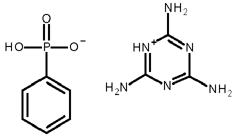 | Melaminphenylphosphonat | FR-P4 |
| 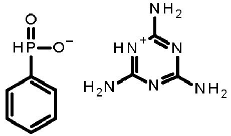 | Melaminphenylphosphinat | FR-P5 |

### Herstellung und Brandverhalten von mehrlagigen Folienkörpern

Polypropylen Moplen RP320M wurde in einem DSM Extruder (DSM Micro 15) aufgeschmolzen, mit den in Tabelle 3 angegebenen Mengen an Flammschutzadditiven vermischt, und bei einer Schmelzetemperatur von 210 °C über 5 min. homogen eingearbeitet. Die Polymerschmelze wurde anschließend als Strang abgelassen und nachfolgend an einer hydraulischen Laborhandpresse PW 40 (Firma Weber, 73630 Remshalden) bei 170 °C zu Folien mit Dicken von 100 - 150 µm verpresst. Die Folien wurden anschließend zu mehrlagigen Folienbällen mit einem Durchmesser von ca. 5 cm geformt. Die Beurteilung des Brandverhaltens erfolgte in einem Kleinbrennertest analog DIN 4102 mit einer Beflammungszeit von drei Sekunden bei gleichzeitiger Dokumentation der Nachbrennzeiten (in Sekunden nach Ende der Beflammung). Die mehrlagigen Folienbälle können als Modell für die aus dünnen Zellstegen und Zellwänden bestehenden Schaumstoffe angesehen werden. Die Ergebnisse des Kleinbrennertestes sind in Tabelle 3 zusammengestellt:

**Tabelle 3 Brandverhalten der Beispiele 1 - 44 und Vergleichsversuche V1 - V9**

| Bsp. | Flammschutzmittel FR-A (Gew.-% bezogen auf PP) | Flammschutzmittel FR-P (Gew.-% bezogen auf PP) | Brandtest (analog B2 nach DIN 4102) / Nachbrennzeiten (s) |
|---|---|---|---|
| V1 | 0,25 Flamestab® NOR 116 FF | - | brennt ab / > 20 |
| V2 | 0,5 Flamestab® NOR 116 FF | - | brennt ab / > 20 |
| V3 | 1,0 Flamestab® NOR 116 FF | - | brennt ab / > 20 |
| V4 | 2,0 Flamestab® NOR 116 FF | - | brennt ab / > 20 |
| V5 | - | 10,0 FR-P1 | brennt ab / > 20 |
| V6 | - | 10,0 FR-P2 | brennt ab / > 20 |
| V7 | - | 10,0 FR-P3 | brennt ab / > 20 |
| V8 | - | 10,0 FR-P4 | brennt ab / > 20 |
| V9 | - | 10,0 FR-P5 | brennt ab / > 20 |
| 1 | 0,25 FR-A1 | - | selbstverlöschend / 15 |
| 2 | 0,5 FR-A1 | - | selbstverlöschend / 5 |
| 3 | 1,0 FR-A1 | - | selbstverlöschend / 5 |
| 4 | 1,0 FR-A2 | - | selbstverlöschend / 6 |
| 5 | 1,0 FR-A3 | - | selbstverlöschend / 14 |
| 6 | 1,0 FR-A4 | - | selbstverlöschend / 14 |
| 7 | 0,5 FR-A5 | - | selbstverlöschend / 9 |
| 8 | 1,0 FR-A5 | - | selbstverlöschend / 7 |
| 9 | 0,1 FR-A1 | 5,0 FR-P1 | selbstverlöschend / 12 |
| 10 | 0,25 FR-A1 | 5,0 FR-P1 | selbstverlöschend / 9 |
| 11 | 0,5 FR-A1 | 5,0 FR-P1 | selbstverlöschend / 4 |
| 12 | 1,0 FR-A1 | 5,0 FR-P1 | selbstverlöschend / 4 |
| 13 | 0,1 FR-A1 | 5,0 FR-P2 | selbstverlöschend / 12 |
| 14 | 0,25 FR-A1 | 5,0 FR-P2 | selbstverlöschend / 7 |
| 15 | 0,5 FR-A1 | 5,0 FR-P2 | selbstverlöschend / 3 |
| 16 | 1,0 FR-A1 | 5,0 FR-P2 | selbstverlöschend / 4 |
| 17 | 0,1 FR-A1 | 5,0 FR-P3 | selbstverlöschend / 6 |
| 18 | 0,25 FR-A1 | 5,0 FR-P3 | selbstverlöschend / 3 |
| 19 | 0,5 FR-A1 | 5,0 FR-P3 | selbstverlöschend / 3 |
| 20 | 1,0 FR-A1 | 5,0 FR-P3 | selbstverlöschend / 2 |
| 21 | 0,1 FR-A1 | 5,0 FR-P4 | selbstverlöschend / 11 |
| 22 | 0,25 FR-A1 | 5,0 FR-P4 | selbstverlöschend / 6 |
| 23 | 0,5 FR-A1 | 5,0 FR-P4 | selbstverlöschend / 5 |
| 24 | 1,0 FR-A1 | 5,0 FR-P4 | selbstverlöschend / 5 |
| 25 | 0,1 FR-A1 | 5,0 FR-P5 | |
| 26 | 0,25 FR-A1 | 5,0 FR-P5 | |
| 27 | 0,5 FR-A1 | 5,0 FR-P5 | |
| 28 | 1,0 FR-A1 | 5,0 FR-P5 | |
| 29 | 0,1 FR-A2 | 5,0 FR-P3 | selbstverlöschend / 8 |
| 30 | 0,25 FR-A2 | 5,0 FR-P3 | selbstverlöschend / 8 |
| 31 | 0,5 FR-A2 | 5,0 FR-P3 | selbstverlöschend / 6 |
| 32 | 1,0 FR-A2 | 5,0 FR-P3 | selbstverlöschend / 9 |
| 33 | 0,1 FR-A3 | 5,0 FR-P3 | selbstverlöschend / 7 |
| 34 | 0,25 FR-A3 | 5,0 FR-P3 | selbstverlöschend / 8 |
| 35 | 0,5 FR-A3 | 5,0 FR-P3 | selbstverlöschend / 5 |
| 36 | 1,0 FR-A3 | 5,0 FR-P3 | selbstverlöschend / 6 |
| 37 | 0,1 FR-A4 | 5,0 FR-P3 | selbstverlöschend / 7 |
| 38 | 0,25 FR-A4 | 5,0 FR-P3 | selbstverlöschend / 3 |
| 39 | 0,5 FR-A4 | 5,0 FR-P3 | selbstverlöschend / 4 |
| 40 | 1,0 FR-A4 | 5,0 FR-P3 | selbstverlöschend / 2 |
| 41 | 0,1 FR-A5 | 5,0 FR-P3 | selbstverlöschend / 10 |
| 42 | 0,25 FR-A5 | 5,0 FR-P3 | selbstverlöschend / 5 |
| 43 | 0,5 FR-A5 | 5,0 FR-P3 | selbstverlöschend / 3 |
| 44 | 1,0 FR-A5 | 5,0 FR-P3 | selbstverlöschend / 3 |

### Herstellung und Brandverhalten von spritzgegossenen Formteilen (UL94-Stäben):

Polypropylen Moplen RP320M wurde in einem DSM Extruder (DSM Micro 15) aufgeschmolzen, mit den in Tabelle 4 angegebenen Mengen an Flammschutzmitteladditiven vermischt, und bei einer Schmelzetemperatur von 210 °C über 5 min. homogen eingearbeitet. Die Polymerschmelze wurde anschließend mit einem Spritzgussautomaten (10cc Injection Moulding Machine, DSM) bei einer Temperatur von 210 °C und einer Formtemperatur von 60°C zu UL94-Brandstäben der Dicke 1,6 mm verspritzt. Die Flammwidrigkeit der Formmassen wurde nach der Methode UL94-V (Underwriters Laboratories Inc. Standard of Safety, "Test for Flammability of Plastic Materials for Parts in Devices and Appliances", S. 14 bis S. 18 Northbrook 1998) bestimmt. Die Ergebnisse des UL94 Brandtestes sind in Tabelle 4 zusammengestellt:

**Tabelle 4 Brandverhalten und UL94-Klassifizierung der Beispiele 45 bis 50 und Vergleichsversuche V10 bis V15**

| Bsp. | Flammschutzmittel FR-A (Gew.-% bezogen auf PP) | Flammschutzmittel FR-P (Gew.-% bezogen auf PP) | UL94 Klassifizierung | Gesamt-Nachbrenndauer (sek.) |
|---|---|---|---|---|
| V10 | 0,25 Flamestab® NOR 116 FF | | n.c. | 284 |
| V11 | 0,5 Flamestab® NOR 116 FF | | n.c. | 266 |
| V12 | 1,0 Flamestab® NOR 116 FF | | n.c. | 295 |
| V13 | 5,0 FR-P2 | | V-2 | 76 |
| V14 | 15 FR-P3 | | V-2 | 55 |
| V15 | 10,0 FR-P3 | - | V-2 | 58 |
| 45 | 0,5 FR-A1 | 5,0 FR-P2 | V-0 | 8 |
| 46 | 0,5 FR-A1 | 10,0 FR-P2 | V-0 | 5 |
| 47 | 0,5 FR-A1 | 5,0 FR-P1 | | |
| 48 | 0,25 FR-A1 | 5,0 FR-P2 | | |
| 49 | 0,25 FR-A1 | 10,0 FR-P2 | | |
| 50 | 0,25 FR-A1 | 5,0 FR-P1 | | |

## Patentansprüche

1. Verwendung einer Verbindung der Formel (I) 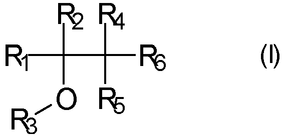 in der die Substituenten die folgende Bedeutung haben:
R₁: substituiertes oder unsubstituiertes C₆-C₁₄-Aryl;
R₂: substituiertes oder unsubstituiertes C₆-C₁₄-Aryl,
C₁-C₈-Alkyl, C₅-C₈-Cycloalkyl, Benzyl, CN;
C₁-C₈-Alkoxy, C₅-C₈-Cycloalkoxy oder Benzyloxy;
R₃: H, C₁-C₈-Alkyl, C₅-C₈-Cycloalkyl, Benzyl, C₁-C₁₈-Acyl oder (CH₃)₃Si;
R₄: H, OH, substituiertes oder unsubstituiertes C₆-C₁₄-Aryl, C₁-C₈-Alkoxy, C₅-C₈-Cycloalkoxy oder Benzyloxy;
R₅: substituiertes oder unsubstituiertes C₁-C₈-Alkyl, C₆-C₁₄-Aryl, C₁-C₈-Alkoxy, C₅-C₈-Cycloalkoxy oder Benzyloxy;
R₆: substituiertes oder unsubstituiertes C₆-C₁₄-Aryl,
oder
R₁: substituiertes oder unsubstituiertes C₆-C₁₄-Aryl;
R₂, R₃: bilden zusammen mit dem Kohlenstoffatom, an das sie gebunden sind, ein Ringsystem;
R₄, R₅: bilden zusammen mit dem Kohlenstoffatom, an das sie gebunden sind, ein Ringsystem;
R₆: substituiertes oder unsubstituiertes C₆-C₁₄-Aryl,
als halogenfreies Flammschutzmittel.

2. Verwendung nach Anspruch 1, **dadurch gekennzeichnet, dass** R₄ und R₅ C₁-C₄-Alkoxy und R₁ und R₆ Phenyl sind.

3. Formmasse, bestehend aus
a) 70 bis 99,95 Gew.-% mindestens eines thermoplastischen Polymeren P,
b) 0,05 bis 10 Gew.-% mindestens einer Verbindung der Formel (I) gemäß Anspruch 1 als Flammschutzmittels FR-A,
c) 0 bis 10 Gew.-% einer halogenfreien, organischen Phosphorverbindung als Flammschutzmittel FR-P,
d) 0 bis 10 Gew.-% eines weiteren Additives A
wobei die Summe der Komponenten a) bis d) 100 Gew.-% ergeben und die Formmasse halogenfrei ist.

4. Formmasse nach Anspruch 3, bestehend aus
a) 75 bis 99,8 Gew.-% mindestens eines thermoplastischen Polymeren P,
b) 0,1 bis 5 Gew.-% mindestens einer Verbindung der Formel (I) gemäß Anspruch 1 als Flammschutzmittels FR-A,
c) 0,1 bis 10 Gew.-% einer halogenfreien, organischen Phosphorverbindung als Flammschutzmittel FR-P,
d) 0 bis 10 Gew.-% eines weiteren Additives A
wobei die Summe der Komponenten a) bis d) 100 Gew.-% ergeben.

5. Formmasse nach Anspruch 3 oder 4, bestehend aus
a) 80 bis 97,9 Gew.-% mindestens eines thermoplastischen Polymeren P,
b) 0,1 bis 2 Gew.-% mindestens einer Verbindung der Formel (I) gemäß Anspruch 1 als Flammschutzmittels FR-A,
c) 1 bis 8 Gew.-% einer halogenfreien, organischen Phosphorverbindung als Flammschutzmittel FR-P,
d) 1 bis 10 Gew.-% eines weiteren Additives A
wobei die Summe der Komponenten a) bis d) 100 Gew.-% ergeben.

6. Formmasse nach einem der Ansprüche 3 bis 5, **dadurch gekennzeichnet dass**, das thermoplastisches Polymer P ein Polyolefin ist.

7. Formmasse nach einem der Ansprüche 3 bis 6, **dadurch gekennzeichnet dass**, das Flammschutzmittel FR-A eine Verbindung der Formel (I) gemäß Anspruch 1 mit R₄ und R₅ C₁-C₄-Alkoxy und R₁ und R₆ Phenyl ist.

8. Formmasse nach einem der Ansprüche 3 bis 7, **dadurch gekennzeichnet, dass** das Flammschutzmittels FR-P ein halogenfreies, organisches Phoshat, Phosphonate, Phosphinat, Phosphinoxid, Phosphin oder Phosphit ist.

9. Formmasse nach einem der Ansprüche 4 bis 8, **dadurch gekennzeichnet, dass** das Gewichtsverhältnis von Flammschutzmittel FR-A zu FR-P im Bereich von 1:10 bis 10:1 liegt.

10. Verwendung der Formmasse nach einem der Ansprüche 3 bis 7 zur Herstellung von Formteilen, Folien oder Schaumstoffen.

## Claims

1. The use of a compound of the formula (I) 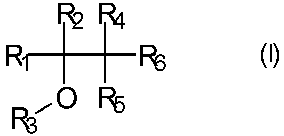 in which the definitions of the substituents are as follows:
R₁: substituted or unsubstituted C₆-C₁₄-aryl;
R₂: substituted or unsubstituted C₆-C₁₄-aryl, C₁-C₈-alkyl, C₅-C₈-cycloalkyl, benzyl, CN; C₁-C₈-alkoxy, C₅-C₈-cycloalkoxy, or benzyloxy;
R₃: H, C₁-C₈-alkyl, C₅-C₈-cycloalkyl, benzyl, C₁-C₁₈-acyl, or (CH₃)₃Si;
R₄: H, OH, substituted or unsubstituted C₆-C₁₄-aryl, C₁-C₈-alkoxy,
C₅-C₈-cycloalkoxy, or benzyloxy;
R₅: substituted or unsubstituted C₁-C₈-alkyl, C₆-C₁₄-aryl, C₁-C₈-alkoxy,
C₅-C₈-cycloalkoxy, or benzyloxy;
R₆: substituted or unsubstituted C₆-C₁₄-aryl,
or
R₁: substituted or unsubstituted C₆-C₁₄-aryl;
R₂, R₃: form together with the carbon atom to which they are bonded a ring system;
R₄, R₅: form together with the carbon atom to which they are bonded a ring system;
R₆: substituted or unsubstituted C₆-C₁₄-aryl,
As halogen-free flame retardant.

2. The use according to claim 1, wherein R₄ and R₅ are C₁-C₄-alkoxy and R₁ and R₆ are phenyl.

3. A molding composition consisting of
a) from 70 to 99.95% by weight of at least one thermoplastic polymer P,
b) from 0.05 to 10% by weight of at least one compound of the formula (I) according to claim 1 as flame retardant FR-A,
c) from 0 to 10% by weight of an organic phosphorus compound as flame retardant FR-P,
d) from 0 to 10% by weight of a further additive A,
where the entirety of components a) to d) gives 100% by weight and the molding composition is halogen-free.

4. The molding composition according to claim 3, consisting of
a) from 75 to 99.8% by weight of at least one thermoplastic polymer P,
b) from 0.1 to 5% by weight of at least one compound of the formula (I) according to claim 1 as flame retardant FR-A,
c) from 0.1 to 10% by weight of a halogen-free organic phosphorus compound as flame retardant FR-P,
d) from 0 to 10% by weight of a further additive A,
where the entirety of components a) to d) gives 100% by weight.

5. The molding composition according to claim 3 or 4, consisting of
a) from 80 to 97.9% by weight of at least one thermoplastic polymer P,
b) from 0.1 to 2% by weight of at least one compound of the formula (I) according to claim 1 as flame retardant FR-A,
c) from 1 to 8% by weight of a halogen-free organic phosphorus compound as flame retardant FR-P,
d) from 1 to 10% by weight of a further additive A,
where the entirety of components a) to d) gives 100% by weight.

6. The molding composition according to any of claims 3 to 5, wherein the thermoplastic polymer P is a polyolefin.

7. The molding composition according to any of claims 3 to 6, wherein the flame retardant FR-A is a compound of the formula (I) according to claim 1 where R₄ and R₅ are C₁-C₄-alkoxy and R₁ and R₆ are phenyl.

8. The molding composition according to any of claims 3 to 7, wherein the flame retardant FR-P is a halogen-free organic phosphate, phosphonate, phosphinate, phosphine oxide, phosphine, or phosphite.

9. The molding composition according to any of claims 4 to 8, wherein the ratio by weight of flame retardant FR-A to FR-P is in the range from 1:10 to 10:1.

10. The use of the molding composition according to any of claims 3 to 7 for the production of moldings, foils, or foams.

## Revendications

1. Utilisation d'un composé de formule (I) 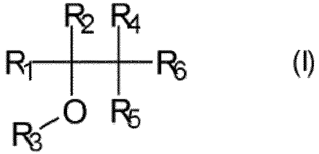 dans laquelle les substituants ont la signification suivante :
R₁ : aryle en C₆-C₁₄ substitué ou non substitué ;
R₂ : aryle en C₆-C₁₄ substitué ou non substitué, alkyle en C₁-C₈, cycloalkyle en C₅-C₈, benzyle, CN ; alcoxy en C₁-C₈, cycloalcoxy en C₅-C₈ ou benzyloxy ;
R₃ : H, alkyle en C₁-C₈, cycloalkyle en C₅-C₈, benzyle,
acyle en C₁-C₁₈ ou (CH₃)₃Si ;
R₄ : H, OH, aryle en C₆-C₁₄ substitué ou non substitué,
alcoxy en C₁-C₈, cycloalcoxy en C₅-C₈ ou benzyloxy ;
R₅ : alkyle en C₁-C₈ substitué ou non substitué, aryle en C₆-C₁₄, alcoxy en C₁-C₈, cycloalcoxy en C₅-C₈ ou benzyloxy ;
R₆ : aryle en C₆-C₁₄ substitué ou non substitué,
ou
R₁ : aryle en C₆-C₁₄ substitué ou non substitué ;
R₂, R₃ : forment ensemble avec l'atome de carbone auquel ils sont reliés un système cyclique ;
R₄, R₅ : forment ensemble avec l'atome de carbone auquel ils sont reliés un système cyclique ;
R₆ : aryle en C₆-C₁₄ substitué ou non substitué,
en tant qu'agent ignifuge sans halogène.

2. Utilisation selon la revendication 1, **caractérisée en ce que** R₄ et R₅ représentent alcoxy en C₁-C₄ et R₁ et R₆ représentent phényle.

3. Matériau de moulage, constitué par :
a) 70 à 99,95 % en poids d'au moins un polymère thermoplastique P,
b) 0,05 à 10 % en poids d'au moins un composé de formule (I) selon la revendication 1 en tant qu'agent ignifuge FR-A,
c) 0 à 10 % en poids d'un composé de phosphore organique sans halogène en tant qu'agent ignifuge FR-P,
d) 0 à 10 % en poids d'un autre additif A,
la somme des composants a) à d) étant de 100 % en poids et le matériau de moulage étant sans halogène.

4. Matériau de moulage selon la revendication 3, constitué par :
a) 75 à 99,8 % en poids d'au moins un polymère thermoplastique P,
b) 0,1 à 5 % en poids d'au moins un composé de formule (I) selon la revendication 1 en tant qu'agent ignifuge FR-A,
c) 0,1 à 10 % en poids d'un composé de phosphore organique sans halogène en tant qu'agent ignifuge FR-P,
d) 0 à 10 % en poids d'un autre additif A,
la somme des composants a) à d) étant de 100 % en poids.

5. Matériau de moulage selon la revendication 3 ou 4, constitué par :
a) 80 à 97,9 % en poids d'au moins un polymère thermoplastique P,
b) 0,1 à 2 % en poids d'au moins un composé de formule (I) selon la revendication 1 en tant qu'agent ignifuge FR-A,
c) 1 à 8 % en poids d'un composé de phosphore organique sans halogène en tant qu'agent ignifuge FR-P,
d) 1 à 10 % en poids d'un autre additif A,
la somme des composants a) à d) étant de 100 % en poids.

6. Matériau de moulage selon l'une quelconque des revendications 3 à 5, **caractérisé en ce que** le polymère thermoplastique P est une polyoléfine.

7. Matériau de moulage selon l'une quelconque des revendications 3 à 6, **caractérisé en ce que** l'agent ignifuge FR-A est un composé de formule (I) selon la revendication 1 avec R₄ et R₅ représentant alcoxy en C₁-C₄ et R₁ et R₆ représentant phényle.

8. Matériau de moulage selon l'une quelconque des revendications 3 à 7, **caractérisé en ce que** l'agent ignifuge FR-P est un phosphate, un phosphonate, un phosphinate, un oxyde de phosphine, une phosphine ou un phosphite organique sans halogène.

9. Matériau de moulage selon l'une quelconque des revendications 4 à 8, **caractérisé en ce que** le rapport en poids entre les agents ignifuges FR-A et FR-P se situe dans la plage allant de 1:10 à 10:1.

10. Utilisation du matériau de moulage selon l'une quelconque des revendications 3 à 7 pour la fabrication de pièces moulées, de films ou de mousses.
